(19) Europäisches Patentamt
European Patent Office
Office européen des brevets

(11) **EP 3 250 943 B1**

(12) **EUROPÄISCHE PATENTSCHRIFT**

(45) Veröffentlichungstag und Bekanntmachung des Hinweises auf die Patenterteilung:
**30.06.2021 Patentblatt 2021/26**

(21) Anmeldenummer: **15813884.2**

(22) Anmeldetag: **23.12.2015**

(51) Int Cl.:
*G01S 7/48* (2006.01)   *G01S 13/72* (2006.01)
*G01S 15/87* (2006.01)   *G01S 7/527* (2006.01)
*G01S 13/931* (2020.01)   *G01S 15/931* (2020.01)
*G01S 17/931* (2020.01)

(86) Internationale Anmeldenummer:
**PCT/EP2015/081109**

(87) Internationale Veröffentlichungsnummer:
**WO 2016/119982 (04.08.2016 Gazette 2016/31)**

(54) **VERFAHREN ZUM ERFASSEN EINES OBJEKTS IN EINEM UMGEBUNGSBEREICH EINES KRAFTFAHRZEUGS DURCH ÜBERPRÜFEN EINER RÄUMLICHEN ABWEICHUNG VON MESSPUNKTEN, STEUEREINRICHTUNG, FAHRERASSISTENZSYSTEM SOWIE KRAFTFAHRZEUG**

METHOD FOR OBJECT ACQUISITION IN THE ENVIRONMENT OF A VEHICLE BY VERIFYING A SPATIAL DEVIATION OF MEASUREMENT POINTS, CONTROL DEVICE, DRIVER ASSISTANCE SYSTEM AND VEHICLE

PROCÉDÉ D'ACQUISITION D'UN OBJET DANS DES ALENTOURS D'UN VÉHICULE PAR VÉRIFICATION D'UNE DÉVIATION SPATIALE DES POINTS MESURÉS, DISPOSITIF DE CONTRÔLE, SYSTÈME D'ASSISTANCE À LA CONDUITE ET VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.01.2015 DE 102015101292**

(43) Veröffentlichungstag der Anmeldung:
**06.12.2017 Patentblatt 2017/49**

(73) Patentinhaber: **Valeo Schalter und Sensoren GmbH**
**74321 Bietigheim-Bissingen (DE)**

(72) Erfinder:
• **HONER, Jens**
  **74321 Bietigheim-Bissingen (DE)**
• **LOEWENSTEIN, Viktor**
  **74321 Bietigheim-Bissingen (DE)**
• **MICHAEL, Anto**
  **74321 Bietigheim-Bissingen (DE)**
• **HALLEK, Michael**
  **74321 Bietigheim-Bissingen (DE)**

(74) Vertreter: **Enge, Sebastian et al**
**Valeo Schalter und Sensoren GmbH**
**CDA-IP**
**Laiernstraße 12**
**74321 Bietigheim-Bissingen (DE)**

(56) Entgegenhaltungen:
EP-A1- 0 369 050       EP-A1- 1 522 873
DE-A1- 19 842 250      DE-A1-102004 017 268
JP-A- 2003 151 095     US-A- 6 163 252

• **JELLE VAN KLEEF ET AL: "Multiple-Hypothesis Trilateration and Tracking with Distributed Radars", 2006 9TH INTERNATIONAL CONFERENCE ON INFORMATION FUSION, FUSION - 2006 9TH INTERNATIONAL CONFERENCE ON INFORMATION FUSION, FUSION 2006 INST. OF ELEC. AND ELEC. ENG. COMPUTER SOCIETY US, IEEE, PISCATAWAY, NJ, USA, 1. Juli 2006 (2006-07-01), Seiten 1-7, XP031042358, ISBN: 978-1-4244-0953-2**
• **None**

**Beschreibung**

Die vorliegende Erfindung betrifft ein Verfahren zum Erfassen eines Objekts in einem Umgebungsbereich eines Kraftfahrzeugs, bei welchem eine Mehrzahl von Messsequenzen durchgeführt werden, wobei in jeder der Messsequenzen anhand der Sensorsignale von zumindest zwei Abstandssensoren mittels einer Steuereinrichtung zumindest ein Messpunkt bestimmt wird, welcher eine relative Lage zwischen dem Kraftfahrzeug und dem Objekt beschreibt. Die Erfindung betrifft außerdem eine Steuereinrichtung für ein Fahrerassistenzsystem. Zudem betrifft die Erfindung ein Fahrerassistenzsystem. Schließlich betrifft die vorliegende Erfindung ein Kraftfahrzeug.

Das Interesse richtet sich vorliegend auf Abstandssensoren für Kraftfahrzeuge. Derartige Abstandssensoren können beispielsweise dazu verwendet werden, Objekte bzw. Hindernisse in dem Umgebungsbereich zu erfassen bzw. zu detektieren. Weiterhin dienen die Abstandssensoren dazu, einen Abstand zwischen dem Kraftfahrzeug und dem Objekt zu bestimmen. Die Abstandssensoren bestimmen den Abstand zwischen dem Kraftfahrzeug und dem Objekt üblicherweise nach dem Echolotprinzip. Das bedeutet, dass mit den Abstandssensoren ein Sendesignal ausgesendet wird, welches von dem Objekt reflektiert wird. Das reflektierte Sendesignal bzw. Echosignal kann dann wieder von dem Abstandssensor erfasst werden. Anhand der Laufzeit zwischen dem Aussenden des Sendesignals und dem Empfangen des Echosignals kann der Abstand bestimmt werden. Derartige Abstandssensoren können beispielsweise Ultraschallsensoren, Radarsensoren oder Lasersensoren sein. Sie werden üblicherweise in Zusammenhang mit Fahrerassistenzsystemen eingesetzt, welche den Fahrer beim Führen des Kraftfahrzeugs unterstützen. Solche Fahrerassistenzsysteme können beispielsweise Parkhilfesysteme, Parkassistenten oder Abstandsregeltempomaten sein.

Im Zusammenhang mit Abstandssensoren von Kraftfahrzeugen ist es auch bekannt, dass mit den Abstandssensoren eine relative Lage zwischen dem Kraftfahrzeug und dem Objekt bestimmt werden kann. Hierzu kann beispielsweise die Triangulation genutzt werden. Dabei wird der Abstand zwischen dem Abstandssensor und dem Objekt beispielsweise ausgehend von zwei unterschiedlichen Positionen des Abstandssensors bestimmt. Ein derartiges Verfahren ist beispielsweise in der DE 103 61 315 A1 beschrieben.

Um die relative Lage zwischen dem Kraftfahrzeug und dem Objekt zuverlässig bestimmen zu können, müssen die mit den Abstandssensoren bereitgestellten Sensorsignale beurteilt werden. Eine Möglichkeit besteht darin, das Signal-Rausch-Verhältnis der Sensorsignale zu bestimmen. Ein derartiges Verfahren ist beispielsweise in der DE 10 2012 017 367 A1 offenbart. Hierbei wird das Signal-Rausch-Verhältnis eines von einem Ultraschallsensor eines Kraftfahrzeugs empfangenen Zielechos bestimmt. Dazu wird ein Sendesignal codiert ausgesendet und ein von dem Ultraschallsensor empfangenes Empfangssignal wird decodiert. Zur Decodierung wird das Empfangssignal mit einem entsprechenden Referenzsignal korreliert, wobei zudem ein Korrelationssignal bereitgestellt wird. Zur Bestimmung des Signal-Rausch-Verhältnisses wird ein Wert des Rauschens des Empfangssignals anhand des Korrelationssignals bestimmt.

Derzeit erfolgt das Bestimmen des Signal-Rausch-Verhältnisses bzw. die Unterscheidung zwischen Nutzsignal und Störsignal ausschließlich auf Signalebene. Beispielsweise können Messpunkte ausgewertet werden, welche die relative Lage zwischen dem Kraftfahrzeug und dem Objekt beschreiben. Diese Messpunkte werden in mehreren zeitlich aufeinanderfolgenden Messsequenzen mit den Abstandssensoren bestimmt. Wenn einzelne Messpunkte in den mehreren aufeinanderfolgenden Messsequenzen wiederholt detektiert bzw. bestätigt werden, wird davon ausgegangen, dass die Messpunkte jeweils ein Echosignal, welches von einem realen Objekt reflektiert wurde, darstellen. Durch diese Bestätigung der Messsignale wird verhindert, dass Störsignale zur Objektdetektion herangezogen werden.

Bei dem bisher verwendeten Verfahren müssen die Messpunkte üblicherweise in mehren Messsequenzen der Abstandssensoren bestätigt werden. Wenn beispielsweise ein solcher Messpunkt in einer der Messsequenzen nicht bestimmt wird, kann es zu Verzögerungen bei der Bestätigung dieses Messpunktes kommen. Dies kann wiederum zu hohen Latenzzeiten führen. Weiterhin kann hierbei nicht unterschieden werden, ob die Messpunkte ein reales Objekt oder eine Störung, die beispielsweise von Messsignalen anderer Systeme verursacht werden, stammen. Somit können die Messpunkte bzw. die gemessenen Sensorsignale nicht auf Konsistenz geprüft werden. Weitere bekannte Verfahren zum Erfassen eines Objekts sind offenbart in DE 198 42 250 A1, EP 1 522 873 A1, US 6 163 252 A, DE 10 2004 017268 A1, JP 2003 151095 A und EP 0 369 050 A1. Auch JELLE VAN KLEEF ET AL: "Multiple-Hypothesis Trilateration and Tracking with Distributed Radars",2006 9TH INTERNATIONAL CONFERENCE ON INFORMATION FUSION, FUSION - 2006 9TH INTERNATIONAL CONFERENCE ON INFORMATION FUSION, FUSION 2006 INST. OF ELEC. AND ELEC. ENG. COMPUTER SOCIETY US, IEEE, PISCATAWAY, NJ, USA, 1. Juli 2006 (2006-07-01), Seiten 1-7, XP031042358,ISBN: 978-1-4244-0953-2 stellt ein derartiges Verfahren vor.

Es ist Aufgabe der vorliegenden Erfindung, eine Lösung aufzuzeigen, wie ein Objekt in einem Umgebungsbereich eines Kraftfahrzeugs mit Hilfe von Abstandssensoren zuverlässiger erfasst werden kann.

Diese Aufgabe wird erfindungsgemäß durch ein Verfahren, durch ein Steuergerät, durch ein Fahrerassistenzsystem sowie durch ein Kraftfahrzeug mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Ein erfindungsgemäßes Verfahren dient zum Erfassen eines Objekts in einem Umgebungsbereich eines Kraftfahrzeugs. Hierbei wird eine Mehrzahl von Messsequenzen durchgeführt. In jeder der Messsequenzen wird anhand der Sensorsignale von zumindest zwei Abstandssensoren mittels einer Steuereinrichtung zumindest ein Messpunkt bestimmt, welcher eine relative Lage zwischen dem Kraftfahrzeug und dem Objekt beschreibt. Zudem wird mittels der Steuereinrichtung überprüft, ob die während zumindest zwei der Messsequenzen bestimmten Messpunkte eine vorbestimmte räumliche Abweichung zueinander aufweisen. Bestätigte Messpunkte weisen dabei keine räumliche Abweichung auf, die größer als eine räumliche Toleranz ist. Unbestätigte Messpunkte weisen eine räumliche Abweichung auf, die größer als eine räumliche Toleranz ist. Schließlich wird eine Streuung der unbestätigten Messpunkte bestimmt.

Das Verfahren dient dazu, ein Objekt in dem Umgebungsbereich des Kraftfahrzeugs zu detektieren. Hierzu werden mindestens zwei Abstandssensoren eingesetzt. Diese Abstandssensoren können beispielsweise als Ultraschallsensoren, Radarsensoren oder Lasersensoren ausgebildet sein. Die Abstandssensoren arbeiten insbesondere nach dem Echolotprinzip. Das heißt, die Abstandssensoren können jeweils ein Sendesignal aussenden, welches dann von dem Objekt oder mehreren Objekten in dem Umgebungsbereich des Kraftfahrzeugs reflektiert wird. Ferner können die Abstandssensoren dazu ausgelegt sein, das von dem Objekt reflektierte Sendesignal bzw. Echosignal wieder zu empfangen.

Mit den zumindest zwei Abstandssensoren werden jeweils mehrere aufeinanderfolgende, insbesondere zeitlich aufeinanderfolgende, Messsequenzen durchgeführt. In jeder der Messsequenzen wird eine relative Lage zwischen dem Kraftfahrzeug und dem Objekt bestimmt. Hierzu kann mit den zumindest zwei Abstandssensoren jeweils der Abstand zwischen dem jeweiligen Abstandssensor und dem Objekt bestimmt werden. Anhand der bekannten Einbaulage der Abstandssensoren bzw. dem Abstand der zwei Abstandssensoren zueinander kann anhand von geometrischen Beziehungen die relative Lage zwischen dem Kraftfahrzeug und dem Objekt bestimmt werden. Die mit den Abstandssensoren bereitgestellten Sensorsignale, die beispielsweise als Spannungssignal vorliegen, werden mittels einer Steuereinrichtung ausgewertet. Die Steuereinrichtung kann beispielsweise durch ein Steuergerät des Kraftfahrzeugs (ECU - Electronic Control Unit) gebildet sein. Mit der Steuereinrichtung werden Messpunkte bestimmt, welche die relative Lage zwischen dem jeweiligen Sensor und dem Objekt beschreiben. Die Messpunkte können beispielsweise in eine digitale Umgebungskarte, welche den Umgebungsbereich des Kraftfahrzeugs abbildet bzw. beschreibt, eingetragen werden.

Die Steuereinrichtung ist ferner dazu ausgelegt, die Messpunkte, die in zwei Messsequenzen bestimmt werden, miteinander zu vergleichen. Dabei kann die Steuereinrichtung die Messpunkte, die von zwei Abstandssensoren im Wesentlichen zeitgleich in jeweiligen Messsequenzen bestimmt werden, miteinander vergleichen. Die Steuereinrichtung kann auch die Messpunkte, die mit einem einzigen Abstandssensor in zwei aufeinanderfolgenden Messsequenzen bestimmt werden, miteinander vergleichen. Insbesondere kann die Steuereinrichtung die Lagepositionen, welche die jeweiligen Messpunkte beschreiben, miteinander vergleichen. Somit kann überprüft werden, ob die Messpunkte in aufeinanderfolgenden Messsequenzen bestätigt werden. Falls die Messpunkte, die in den zumindest zwei Messsequenzen bestimmt werden, die vorbestimmte räumliche Abweichung zueinander aufweisen, d.h. eine räumliche Abweichung aufweisen, die größer als eine räumliche Toleranz ist, wird die Streuung der Messpunkte bestimmt. Die Streuung der Messpunkte ergibt sich aus der Verteilung und kann als Indikator für die Struktur der Verteilung dienen. Dem liegt die Erkenntnis zugrunde, dass bei der Bestimmung von Messpunkten grundsätzlich Störungen auftreten können, welche die räumliche Verteilung der Messpunkte beeinflussen. Anhand der Bestimmung der Streuung kann somit grundsätzlich untersucht werden, ob die Messpunkte bzw. die räumliche Verteilung der Messpunkte strukturiert ist oder ob eine komplett zufällige Verteilung vorliegt. Somit können die Messpunkte anhand ihrer räumlichen Abteilung bzw. anhand ihrer Streuung beurteilt werden.

Erfindungsgemäß werden die Messpunkte einem jeweiligen Abstandssensor der zumindest zwei Abstandssensoren zugeordnet. Zum Erfassen bzw. Detektieren des Objekts können zumindest zwei Abstandssensoren verwendet werden. Dabei kann es der Fall sein, dass die zumindest zwei Abstandssensoren an unterschiedlichen Positionen angeordnet sind. Beispielsweise können die zumindest zwei Abstandssensoren an unterschiedlichen Positionen an dem Kraftfahrzeug angeordnet sein. Somit weisen die zumindest zwei Abstandssensoren unterschiedliche Erfassungsbereiche auf. Durch die Zuordnung der Messpunkte zu den jeweiligen Sensoren kann überprüft werden, ob diejenigen Messpunkte, die einem Abstandssensor zugeordnet sind, bei mehreren Messsequenzen bestätigt werden. Zudem kann die Streuung der Messpunkte, die einem Sensor zugeordnet sind, bestimmt werden. Die Zuordnung der Messpunkte zu den jeweiligen Abstandssensoren kann anhand eines entsprechenden Sensormodells erfolgen.

In einer Ausführungsform wird ein Erfassungsbereich für jeden der Abstandssensoren bestimmt und die Messpunkte werden den jeweiligen Abstandssensoren anhand des jeweiligen bestimmten Erfassungsbereichs zugeordnet. Der Erfassungsbereich für den jeweiligen Abstandssensor beschreibt insbesondere den Bereich, in welchem mit dem Abstandssensor Objekte erfasst werden können. Dieser Erfassungsbereich ist beispielsweise abhängig von der Richtcharakteristik des ausgesendeten Sendesignals. Hierzu kann beispielsweise die räumliche Erstreckung des jeweiligen Erfassungsbereichs bestimmt werden. Anschließend kann überprüft werden, welche der Messpunkte innerhalb des Erfassungsbereichs liegen. Somit können die einzelnen Messpunkte zuverlässig jeweils einem Abstandssensor zugeordnet werden.

In einer weiteren Ausführungsform werden die Messpunkte in eine Umgebungskarte eingetragen, welche den Umgebungsbereich des Kraftfahrzeugs beschreibt, und die Messpunkte werden anhand ihrer Position in der Umgebungskarte den jeweiligen Abstandssensoren zugeordnet. Dabei kann es vorgesehen sein, dass in die Umgebungskarte sowohl die jeweiligen Positionen der Messpunkte als auch die Positionen der zumindest zwei Abstandssensoren eingetragen werden. Somit kann auf einfache Weise anhand der räumlichen Anordnung der Messpunkte und der Abstandssensoren bestimmt werden, welcher der Messpunkte mit welchem der Abstandssensoren bestimmt wurde. Hierbei können auch die Signalwege der Sensoren berücksichtigt werden. Somit kann eine schnelle Zuordnung der Messpunkte zu den jeweiligen Abstandssensoren erfolgen.

Erfindungsgemäß wird eine Streuung der räumlichen Verteilung der unbestätigten Messpunkte, welche einem der Abstandssensoren zugeordnet sind, mit einem vorbestimmten Schwellenwert verglichen.

Hierbei wird berücksichtigt, dass die Messpunkte grundsätzlich eine Streuung aufweisen können. Fraglich ist, ob durch diese Streuung eine Fehlfunktion des Abstandssensors hervorgerufen wird oder ob diese durch äußere Einflüsse oder durch die Formgebung des Objekts selbst hervorgerufen wird. Hierzu kann ein entsprechender Schwellenwert vorgegeben werden, mit dem die Streuung der Messpunkte verglichen wird. Die Streuung der Messpunkte kann beispielsweise anhand der Kovarianz-Verteilung der Messpunkte bestimmt werden. Insbesondere kann hierzu eine Kovarianz-Matrix bestimmt werden.

Ferner können die Eigenwerte der Kovarianz-Matrix bestimmt werden, wobei beispielsweise der kleinere der beiden Eigenwerte mit dem vorbestimmten Schwellwert verglichen wird. Somit kann die Streuung der Messpunkte auf einfache Weise bestimmt werden.

Erfindungsgemäß werden die Messpunkte dem Objekt zugeordnet, falls die bestimmte Streuung den vorbestimmten Schwellwert unterschreitet. Wenn die Streuung der Messpunkte, die die vorbestimmte Abweichung aufweisen, den Schwellwert unterschreitet, kann davon ausgegangen werden, dass diese einem Objekt zugeordnet werden können. Die Streuungen können beispielsweise in diesem Fall durch äußere Umwelteinflüsse hervorgerufen sein. Dies ist beispielsweise der Fall, wenn sich eine Verschmutzung, Regentropfen, Schnee und/oder Eis an der Oberfläche des Objekts angelagert haben.

In einer weiteren Ausgestaltung werden die Messpunkte als Rauschen identifiziert, falls die bestimmte Streuung den vorbestimmten Schwellenwert überschreitet. Wird beispielsweise anhand des Vergleichs der Streuung mit dem vorbestimmten Schwellenwert erkannt, dass die einzelnen Messpunkte nicht strukturiert vorliegen, sondern komplett zufällig verteilt sind, kann davon ausgegangen werden, dass die Messpunkte auf Grundlage eines Rauschsignals oder fehlerhaften Sensorsignals bestimmt wurden. Diese Messpunkte werden dann insbesondere bei dem Bestimmen der relativen Lage zwischen dem Kraftfahrzeug und dem Objekt nicht berücksichtigt. Somit kann die Lage zwischen dem Kraftfahrzeug und dem Objekt zuverlässig bestimmt werden.

Erfindungsgemäß wird für die Messpunkte, welche einem der zumindest zwei Abstandssensoren zugeordnet sind, ein Anteil der Messpunkte, welche die räumliche Abweichung aufweisen, bestimmt und ein Rauschindikator wird anhand des Anteils bestimmt. Wenn die Messpunkte beispielsweise bei einer aktuellen Messsequenz als Rauschen identifiziert werden, kann ein Rauschindikator bestimmt werden, welcher die Messpunkte näher charakterisiert. Hierzu können jeweils die Messpunkte untersucht werden, die einem Abstandssensor zugeordnet sind. Dabei kann der Anteil der Messpunkte bestimmt werden, welche die vorbestimmte räumliche Abweichung aufweisen. Es wird also der Anteil der Messpunkte bestimmt, welche nicht bestätigt wurden. Zudem kann der Anteil der Messpunkte bestimmt werden, welche bestätigt wurden. Bei den Messpunkten, welche nicht bestätigt wurden, kann zudem der jeweilige Abstand der Messpunkte zueinander bestimmt werden. Aus diesen Größen kann dann der Rauschindikator bestimmt werden. Durch die sensorgenaue Auflösung des Signal-Rausch-Verhältnisses kann beispielsweise bestimmt werden, ob ein Abstandssensor lokal gestört ist.

Bevorzugt wird der Rauschindikator für jeden der Messpunkte bestimmt. Insbesondere wird der Rauschindikator für jeden der Messpunkte, welche die vorbestimmte Abweichung aufweisen. Der Rauschindikator kann die räumliche Abweichung der Messpunkte zueinander beschreiben. Der Rauschindikator beschreibt insbesondere nicht das Signal-Rausch-Verhältnis, welches als das Verhältnis der mittleren Leistung des Nutzsignals zur mittleren Rauschleistung des Störsignals definiert ist. Die Zuweisung des Rauschindikators zu jedem der einzelnen Messpunkte erlaubt es, die Verarbeitungslogik zum Auswerten der einzelnen Messpunkte zu verändern. Beispielsweise anhand des Rauschindikators gesteuert werden, wie die einzelnen Messpunkte individuell in der Umgebungskarte weiterverarbeitet werden. Zudem können die Messpunkte in Abhängigkeit von dem Rauschindikator zusammengefasst bzw. geclustert werden. Ebenso können die Messpunkte miteinander verschmolzen werden.

Weiterhin ist es vorteilhaft, wenn der Rauschindikator, der bei einer zuvor durchgeführten Messsequenz bestimmt wird, anhand des zumindest einen Messpunkts, der bei einer aktuellen Messsequenz bestimmt wird, aktualisiert. Der Rauschindikator kann also beispielsweise zwischen den einzelnen Messsequenzen aktualisiert bzw. upgedatet werden. Somit kann beispielsweise besonders schnell eine Beeinflussung eines Abstandssensors erkannt werden. Weiterhin kann erkannt werden, dass eine Störung des Abstandssensors nicht mehr vorliegt. Auf diese Weise kann das Objekt in dem Umgebungsbereich des Kraftfahrzeugs zuverlässig detektiert werden.

Erfindungsgemäß wird eine Auswertung der Messpunkte in Abhängigkeit von dem bestimmten Rauschindikator durchgeführt. Somit kann der Rauschindikator für eine nachfolgende Verarbeitungslogik genutzt werden. Beispielsweise kann anhand des Rauschindikators eine Störung identifiziert werden. Dies kann in Form einer Gewichtung bei der Assoziation bzw. Zusammenfassung der Messpunkte berücksichtigt werden. Der Auswertealgorithmus zum Auswerten der Messpunkte lässt sich anhand des Rauschindikators auf die spezielle Konfiguration des Messsystems anpassen.

Eine erfindungsgemäße Steuereinrichtung für ein Kraftfahrzeug ist zum Durchführen eines erfindungsgemäßen Verfahrens ausgelegt. Die Steuereinrichtung kann beispielsweise ein Steuergerät des Kraftfahrzeugs sein. Die Steuereinrichtung kann mit den zumindest zwei Abstandssensoren zur Datenübertragung verbunden sein. Somit kann die Steuereinrichtung entsprechende Sensorsignale von den Abstandssensoren empfangen.

Ein erfindungsgemäßes Fahrerassistenzsystem für ein Kraftfahrzeug umfasst eine erfindungsgemäße Steuereinrichtung. Das Fahrerassistenzsystem kann zudem eine Mehrzahl von Abstandssensoren umfassen, die beispielsweise verteilt an dem Kraftfahrzeug angeordnet sind. Das Fahrerassistenzsystem kann beispielsweise ein Parkhilfesystem, ein System zur Totwinkel-Überwachung und/oder ein Abstandsregeltempomat sein.

Ein erfindungsgemäßes Kraftfahrzeug umfasst ein erfindungsgemäßes Fahrerassistenzsystem. Das Kraftfahrzeug ist insbesondere als Personenkraftwagen ausgebildet.

Die mit Bezug auf das erfindungsgemäße Verfahren vorgestellten bevorzugten Ausführungsformen und deren Vorteile gelten entsprechend für die erfindungsgemäße Steuereinrichtung, das erfindungsgemäße Fahrerassistenzsystem sowie für das erfindungsgemäße Kraftfahrzeug.

Die Erfindung wird nun anhand eines bevorzugten Ausführungsbeispiels sowie unter Bezugnahme auf die beigefügten Zeichnungen näher erläutert.

Dabei zeigen:

Fig. 1 in schematischer Darstellung ein Kraftfahrzeug gemäß einer Ausführungsform der vorliegenden Erfindung;

Fig. 2 Messpunkte, welche anhand der Sensorsignale von Abstandssensoren des Kraftfahrzeugs ermittelt wurden;

Fig. 3 eine räumliche Anordnung der Messpunkte zu einem der Abstandssensoren;

Fig. 4 Räumliche Anordnung von mehreren Messpunkten und mehreren Abstandssensoren;

Fig. 5, 7 die Messpunkte, für deren Verteilung Eigenwerte anhand einer Kovarianz-Matrix bestimmt wurden; und

Fig. 6, 8 die Verteilung der Messpunkte gemäß Fig. 5 bzw. gemäß Fig. 7 bezüglich der Abstandssensoren

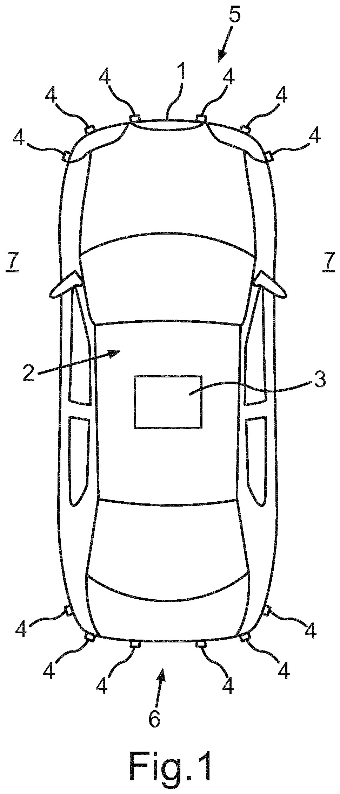

Fig. 1 zeigt in ein Kraftfahrzeug 1 gemäß einer Ausführungsform der vorliegenden Erfindung. Das Kraftfahrzeug 1 ist in dem vorliegenden Ausführungsbeispiel als Personenkraftwagen ausgebildet. Das Kraftfahrzeug 1 umfasst ein Fahrerassistenzsystem 2. Das Fahrerassistenzsystem 2 kann beispielsweise ein Parkassistent sein, welcher den Fahrer beim Einparken in eine Parklücke unterstützt. Beispielsweise kann das Fahrerassistenzsystem 2 dazu ausgelegt sein, eine Parklücke zu erkennen und das Kraftfahrzeug 1 zumindest semi-autonom in die erkannte Parklücke einzuparken. Das Fahrerassistenzsystem 2 kann ferner ein sogenannter Totwinkel-Assistent und/oder ein Abstandsregeltempomat sein.

Das Fahrerassistenzsystem 2 umfasst ferner eine Steuereinrichtung 3. Die Steuereinrichtung 3 kann beispielsweise ein Steuergerät des Kraftfahrzeugs 1 sein. Des Weiteren umfasst das Fahrerassistenzsystem 2 eine Mehrzahl von Abstandssensoren 4. In dem vorliegenden Ausführungsbeispiel umfasst das Fahrerassistenzsystem 2 zwölf Abstandssensoren 4. Die Abstandssensoren 4 sind vorliegend als Ultraschallsensoren ausgebildet. Dabei sind sechs der Abstandssensoren 4 in einem Frontbereich 5 des Kraftfahrzeugs 1 und sechs Abstandssensoren 4 in einem Heckbereich 6 des Kraftfahrzeugs 1 angeordnet. Die Abstandssensoren 4 sind dazu ausgebildet, ein Objekt in einem Umgebungsbereich 7 des Kraftfahrzeugs 1 zu erfassen. Zudem kann mit den Abstandssensoren 4 ein jeweiliger Abstand zwischen den Abstandssensor 4 und dem Objekt bestimmt werden. Beispielsweise kann eine relative Lage zwischen dem Kraftfahrzeug 1 und dem Objekt mittels Triangulation bestimmt werden.

Die Abstandssensoren 4 werden in jeweiligen Messsequenzen, insbesondere zeitlich aufeinanderfolgenden Messsequenzen, betrieben. In jeder Messsequenz wird die relative Lage zwischen dem Kraftfahrzeug 1 und dem Objekt bestimmt. Dabei kann beispielsweise mit den Abstandssensoren 4, die dem Frontbereich 5 des Kraftfahrzeugs 1 zugeordnet sind, eine Messsequenz durchgeführt werden. Hierbei können die Abstandssensoren 4 mittels der Steuereinrichtung 3 sequentiell angesteuert werden. Beim Ansteuern der jeweiligen Abstandssensoren 4 senden diese ein Sendesignal, beispielsweise ein Ultraschallsignal, aus. Das jeweils ausgesendete Sendesignal wird von dem Objekt reflektiert und kann mit jedem der Abstandssensoren 4 wieder empfangen werden. Anhand der Laufzeit des Sendesignals kann dann der Abstand zwischen dem Kraftfahrzeug 1 und dem Objekt bestimmt werden. In jeder Messsequenz werden anhand der Sensorsignale mittels der Steuereinrichtung 3 entsprechende Messpunkte 8, 9 bestimmt. Diese Messpunkte 8, 9 können beispielsweise in eine digitale Umgebungskarte eingetragen werden, welche den Umgebungsbereich 7 des Kraftfahrzeugs 1 beschreibt.

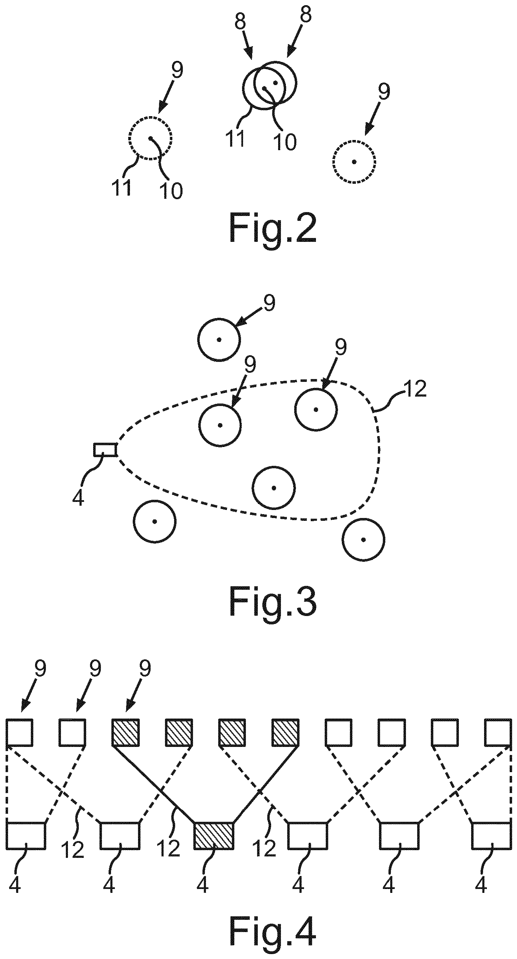

In jeder der Messsequenzen werden Messpunkte 8, 9 bestimmt und in die Umgebungskarte eingetragen. Dies ist in Fig. 2 schematisch dargestellt. Dabei wird überprüft, ob die Messpunkte 8, 9, die in zumindest zwei zeitlich aufeinanderfolgenden Messsequenzen bestimmt werden, eine räumliche Abweichung zueinander aufweisen. Die Messpunkte 8, 9, die in die Umgebungskarte eingetragen sind, sind vorliegend jeweils als Punkt 10 dargestellt, der von einem Kreis 11 umgeben ist. Der Kreis 11 kann dabei eine räumliche Toleranz des Punktes 10 beschreiben. Vorliegend weisen die Messpunkte 8 keine räumliche Abweichung zueinander auf. Diese werden als bestätigte Messpunkte 8 bezeichnet. Die Messpunkte 9 weisen vorliegend eine räumliche Abweichung zueinander auf. Diese können als unbestätigte Messpunkte 9 oder auch als Hypothesen bezeichnet werden. Die Messpunkte 9, die die vorbestimmte räumliche Abweichung zueinander aufweisen, werden nun den jeweiligen Abstandssensoren 4 zugeordnet.

Fig. 3 verdeutlicht ein erstes Beispiel, wie die unbestätigten Messpunkte 9 einem der Abstandssensoren 4 zugeordnet werden können. Hierzu wird beispielsweise in der Umgebungskarte ein Erfassungsbereich 12 für jeden der Abstandssensoren 4 bestimmt.

Der Erfassungsbereich 12 beschreibt den Bereich, in welchem mit dem jeweiligen Abstandssensor 4 Objekte erfasst werden können. Der Erfassungsbereich 12 kann beispielsweise anhand der Richtcharakteristik des Abstandssensors 4 bestimmt werden. Anhand der räumlichen Lage des Erfassungsbereichs 12 und der jeweiligen unbestätigten Messpunkte 9 kann die Zuordnung der unbestätigten Messpunkte 9 zu dem jeweiligen Abstandssensor 4 auf einfache Weise erfolgen.

Fig. 4 zeigt ein weiteres Beispiel, wie die Zuordnung der unbestätigten Messpunkte 9 zu einem der Abstandssensoren 4 erfolgen kann. Hier sind die sechs Abstandssensoren 4 gezeigt, die beispielsweise in dem Frontbereich 5 des Kraftfahrzeugs 1 angeordnet sind. Die jeweiligen Abstandssensoren 4 senden sequentiell das Sendesignal aus. Hierbei können die von dem Objekt reflektierten Signale jeweils mit allen Abstandssensoren 4 erfasst werden. Betrachtet man nur Signalwege 12 von benachbarten Abstandssensoren, ergeben sich maximal zwölf Abstandsmessungen und somit zehn unbestätigte Messpunkte 9. Anhand der Signalwege 12 kann nun die Zuordnung der unbestätigten Messpunkte 9 zu den Abstandssensoren 4 erfolgen. Beispielsweise können die schraffiert hervorgehobenen unbestätigten Messpunkte 9 dem schraffiert hervorgehobenen Abstandssensor 4 zugeordnet werden.

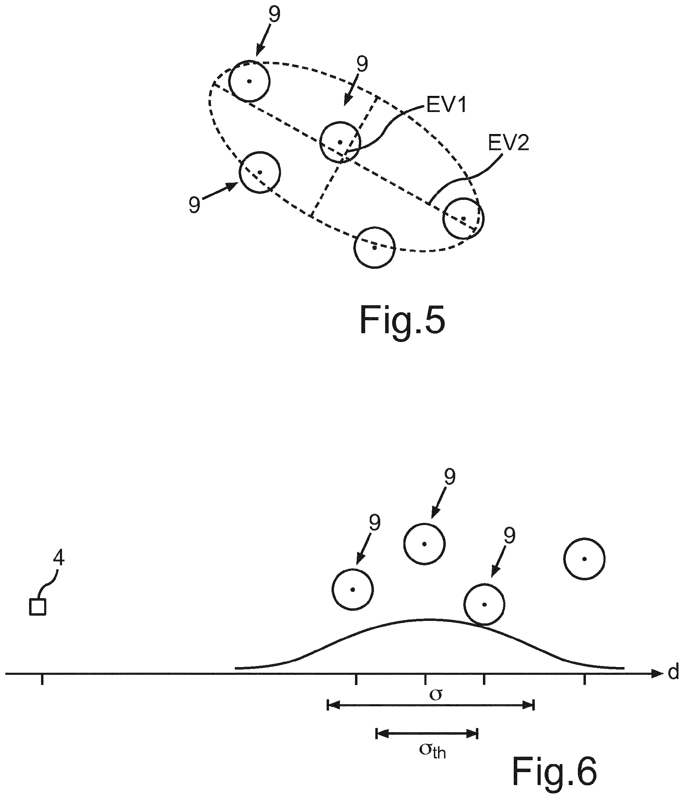

Weiterhin wird die Streuung $\sigma$ der unbestimmten Messpunkte 9 untersucht. Hierzu kann beispielsweise die Kovarianz der räumlichen Verteilung der unbestätigten Messpunkte 9 bestimmt werden. Insbesondere kann die Kovarianz-Matrix dieser Messpunkte 9 bestimmt werden. Dies ist im Zusammenhang mit Fig. 5 gezeigt. Hier sind zusätzlich zu der Verteilung der unbestätigten Messpunkte 9 die beiden Eigenwerte EV1 und EV2 der Kovarianz-Matrix dargestellt. Zum Bestimmen der Streuung $\sigma$ der Messpunkte 9 wird der kleinere der Eigenwerte EV1, EV2, in diesem Fall der Eigenwert EV1, berücksichtigt. Dieser Eigenwert EV1 kann dann mit einem vorbestimmten Schwellwert $\sigma_{th}$ verglichen werden.

Abhängig von den jeweiligen Abstandssensoren 4 lässt sich die Berechnung der Kovarianz-Matrix auch auf die Varianz der Entfernung der Punkte im Sensormodell zu den jeweiligen Abstandssensoren 4 reduzieren. Dies ist beispielhaft in Fig. 6 dargestellt. Hier wird die Streuung $\sigma$ der unbestätigten Messpunkte 9, welche einem der Abstandssensoren 4 zugeordnet sind, betrachtet. Hier werden die unbestätigten Messpunkte 9 bezüglich des Abstands d untersucht. Die Streuung $\sigma$ der unbestätigten Messpunkte wird mit einem Schwellwert $\sigma_{th}$ verglichen. Vorliegend ist die Streuung 7 der Messpunkte 9 größer als der vorbestimmte Schwellwert $\sigma_{th}$.

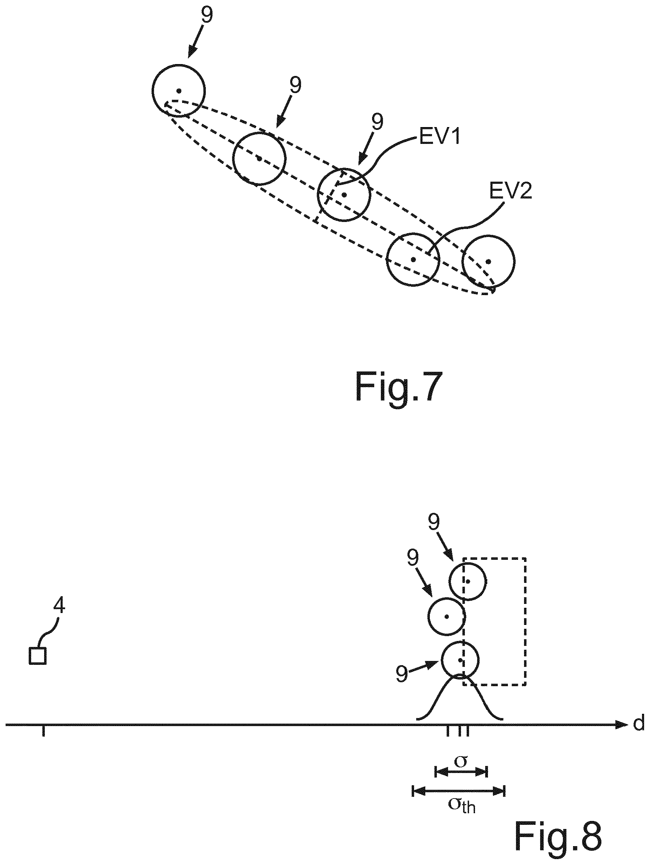

Im Vergleich zu Fig. 5 zeigt Fig. 7 ein Beispiel, bei welchem die unbestätigten Messpunkte 9 eine geringe Streuung $\sigma$ zueinander aufweisen. Dies ist auch in Zusammenhang mit Fig. 8 zu erkennen, welche die Streuung der Messpunkte 9 bezüglich des Abstandssensors 4 zeigt. Hierbei ist die Streuung $\sigma$ geringer als der vorbestimmte Schwellwert $\sigma_{th}$. Hier kann davon ausgegangen werden, dass die Messpunkte einem Objekt zugeordnet werden können. Dies ist beispielhaft durch das Rechteck 13 verdeutlicht.

Für die jeweiligen Messpunkte 8, 9, erfindungsgemäß für die unbestätigten Messpunkte 9, welche einem jeweiligen Abstandssensor 4 zugeordnet sind, wird ein Rauschindikator bestimmt. Der Rauschindikator $c_k^f$ kann nach folgender Formel berechnet werden:

$$c_k^f = N \cdot \sum_{i,j}^{N} d_{ij}^2 \, ,$$

wobei k der jeweilige Index für den Abstandssensor 4 ist, i und j die Indizes für die unbestätigten Messpunkte 9 sind, N die Anzahl der unbestätigten Messpunkte 9 innerhalb eines Sensormodells sind und $d_{ij}$ der Abstand zwischen den einzelnen Messpunkten 9 ist. Der Rauschindikator wird also anhand eines Anteils der bestätigten Messpunkte 8, der unbestätigten Messpunkte 9 und des jeweiligen Abstands zwischen den unbestätigten Messpunkten 9 eines jeweiligen Abstandssensors 4 bestimmt. Vorliegend wird der Rauschindikator für jeden der Abstandssensoren 4 bestimmt. Es ist auch denkbar, dass der Rauschindikator jedem der Messpunkte 9 bestimmt wird.

Dabei ist es zudem insbesondere vorgesehen, dass der Rauschindikator während der jeweiligen Messsequenzen aktualisiert wird. Zum Aktualisieren können die Rauschindikatoren, die in aufeinanderfolgenden Messsequenzen bestimmt werden, aufsummiert werden. Wenn der Rauschindikator bei einer Messsequenz den Wert Null annimmt, kann der Rauschindikator der vorhergehenden Messsequenz herangezogen werden. Wenn sich bei einer vorbestimmten Anzahl von aufeinanderfolgenden Messsequenzen für den Rauschindikator jeweils der Wert Null ergibt, kann die Summe über alle Rauschindikatoren auf den Wert Null gesetzt werden.

Mit Hilfe des Rauschindikators kann beispielsweise eine Störquelle für die Abstandssensoren 4 charakterisiert werden. Im Fall von Ultraschallsensoren kann beispielsweise unterschieden werden, ob das Rauschen der Messpunkte 9 durch Regen oder durch die Signale von Ultraschallsensoren eines anderen Kraftfahrzeugs hervorgerufen wird. Zudem wird der Rauschindikator dann zur weiteren Auswertung der Messpunkte 9 herangezogen.

**Patentansprüche**

1. Verfahren zum Erfassen eines Objekts in einem Umgebungsbereich (7) eines Kraftfahrzeugs (1), bei welchem eine Mehrzahl von Messsequenzen durchgeführt werden, wobei in jeder der Messsequenzen anhand der Sensorsignale von zumindest zwei Abstandssensoren (4) mittels einer Steuereinrichtung (3) zumindest ein Messpunkt (8, 9) bestimmt wird, welcher eine relative Lage zwischen dem Kraftfahrzeug (1) und dem Objekt beschreibt, wobei die Messpunkte (8, 9) einem jeweiligen Abstandsensor (4) der zumindest zwei Abstandssensoren (4) zugeordnet werden, wobei mittels der Steuereinrichtung (3) überprüft wird, ob die während zumindest zwei der Messsequenzen bestimmten Messpunkte (8, 9) eine vorbestimmte räumliche Abweichung zueinander aufweisen, wobei bestätigte Messpunkte (8) keine räumliche Abweichung aufweisen, die größer als eine räumliche Toleranz ist, und unbestätigte Messpunkte (9) eine räumliche Abweichung aufweisen, die größer als eine räumliche Toleranz ist, **dadurch gekennzeichnet, dass** eine Streuung ($\sigma$) der räumlichen Verteilung der unbestätigten Messpunkte (9) bestimmt wird, wobei die bestimmte Streuung ($\sigma$) der unbestätigten Messpunkte (9), welche einem der Abstandssensoren (4) zugeordnet sind, mit einem vorbestimmten Schwellenwert ($\sigma_{th}$) verglichen wird, wobei die unbestätigten Messpunkte (9) dem Objekt zugeordnet werden, falls die bestimmte Streuung ($\sigma$) den vorbestimmten Schwellenwert ($\sigma_{th}$) unterschreitet, wobei für die Messpunkte (8, 9), welche einem der zumindest zwei Abstandssensoren (4) zugeordnet sind, ein Anteil der unbestätigten Messpunkte (9)bestimmt wird und ein Rauschindikator anhand des Anteils bestimmt wird, wobei eine Auswertung der unbestätigten Messpunkte (9) in Abhängigkeit von dem bestimmten Rauschindikator durchgeführt wird..

2. Verfahren nach Anspruch 1,
**dadurch gekennzeichnet, dass**
ein Erfassungsbereich (12) für jeden der Abstandssensoren (4) bestimmt wird und die Messpunkte (8, 9) den jeweiligen Abstandssensoren (4) anhand des jeweiligen bestimmten Erfassungsbereichs (12) zugeordnet werden.

3. Verfahren nach einem der vorhergehenden Ansprüche,
**dadurch gekennzeichnet, dass**
die Messpunkte (8, 9) in eine Umgebungskarte, welche den Umgebungsbereich (7) des Kraftfahrzeugs (1) beschreibt, eingetragen werden und die Messpunkte (8, 9) anhand ihrer Position in der Umgebungskarte den jeweiligen Abstandssensoren (4) zugeordnet werden.

4. Verfahren nach einem der vorhergehenden Ansprüche,
**dadurch gekennzeichnet, dass**
die unbestätigten Messpunkte (9) als Rauschen identifiziert werden, falls die bestimmte Streuung ($\sigma$) den vorbestimmten Schwellenwert ($\sigma_{th}$) überschreitet.

5. Verfahren nach einem der vorhergehenden Ansprüche,
**dadurch gekennzeichnet, dass**
der Rauschindikator für jeden der unbestätigten Messpunkte (9) bestimmt wird.

6. Verfahren nach einem der vorhergehenden Ansprüche,
**dadurch gekennzeichnet, dass**
der Rauschindikator, der bei einer zuvor durchgeführten Messsequenz bestimmt wird, anhand des zumindest einen Messpunkts, der bei einer aktuellen Messsequenz bestimmt wird, aktualisiert wird.

7. Steuereinrichtung (3) für ein Kraftfahrzeug (1), welche zum Durchführen eines Verfahrens nach einem der vorhergehenden Ansprüche ausgelegt ist.

8. Fahrerassistenzsystem (2) für ein Kraftfahrzeug (1) mit einer Steuereinrichtung (3) nach Anspruch 7.

9. Kraftfahrzeug (1) mit einem Fahrerassistenzsystem (2) nach Anspruch 8.

**Claims**

1. Method for capturing an object in an environment region (7) of a motor vehicle (1), wherein a plurality of measurement sequences are performed, wherein at least one measurement point (8, 9) describing a relative position between the motor vehicle (1) and the object is determined in each of the measurement sequences by means of a control device (3) on the basis of the sensor signals from at least two distance sensors (4), wherein the measurement points (8, 9) are assigned to a respective distance sensor (4) of the at least two distance sensors (4), wherein a check is performed by means of the control device (3) as to whether the measurement points (8, 9) determined during at least two of the measurement sequences have a predetermined spatial deviation with respect to one another, wherein confirmed measurement points (8) have no spatial deviation that is greater than a spatial tolerance and unconfirmed measurement points (9) have a spatial deviation that is greater than a spatial tolerance, **characterized in that** a dispersion ($\sigma$) of the spatial distribution of the unconfirmed measurement points (9) is determined, wherein the determined dispersion ($\sigma$) of the unconfirmed measurement points (9), which are assigned to one of the distance sensors (4), is compared to a predetermined threshold value ($\sigma_{th}$), wherein the unconfirmed measurement points (9) are assigned to the object if the determined dispersion ($\sigma$) falls below the predetermined threshold value ($\sigma_{th}$), wherein, for the measurement points (8, 9) that are assigned to one of the at least two distance sensors (4), a portion of the unconfirmed measurement points (9) is determined and a noise indicator is determined on the basis of the portion, wherein an evaluation of the unconfirmed measurement points (9) is performed in dependence on the determined noise indicator.

2. Method according to Claim 1, **characterized in that** a capturing region (12) is determined for each of the distance sensors (4) and the measurement points (8, 9) are assigned to the respective distance sensors (4) on the basis of the respective determined capturing region (12) .

3. Method according to either of the preceding claims, **characterized in that** the measurement points (8, 9) are entered into an environment map describing the environment region (7) of the motor vehicle (1) and the measurement points (8, 9) are assigned to the respective distance sensors (4) on the basis of their positions in the environment map.

4. Method according to one of the preceding claims, **characterized in that** the unconfirmed measurement points (9) are identified as noise if the determined dispersion ($\sigma$) exceeds the predetermined threshold value ($\sigma_{th}$).

5. Method according to one of the preceding claims, **characterized in that** the noise indicator is determined for each of the unconfirmed measurement points (9).

6. Method according to one of the preceding claims, **characterized in that** the noise indicator that is determined during a previously performed measurement sequence is updated on the basis of the at least one measurement point that is determined in a current measurement sequence.

7. Control device (3) for a motor vehicle (1), which is designed for performing a method according to one of the preceding claims.

8. Driver assistance system (2) for a motor vehicle (1) having a control device (3) according to Claim 7.

9. Motor vehicle (1) having a driver assistance system (2) according to Claim 8.

**Revendications**

1. Procédé permettant de détecter un objet dans une zone environnante (7) d'un véhicule automobile (1), dans lequel une pluralité de séquences de mesure sont exécutées, dans chacune des séquences de mesures, au moins un point de mesure (8, 9) étant déterminé au moyen d'un dispositif de commande (3) à l'aide des signaux de capteur d'au moins deux capteurs de distance (4), ledit point décrivant une position relative entre le véhicule automobile (1) et l'objet, les points de mesure (8, 9) étant attribués à un capteur de distance (4) respectif des au moins deux capteurs de distance (4), dans lequel il est vérifié au moyen du dispositif de commande (3) si les points de mesure (8, 9) déterminés pendant au moins deux des séquences de mesure présentent entre eux une déviation spatiale prédéterminée, des points de mesure confirmés (8) ne présentant aucune déviation spatiale qui est supérieure à une tolérance spatiale, et des points de mesure non confirmés (9) présentant une déviation spatiale qui est supérieure à une tolérance spatiale,

**caractérisé en ce qu'**une dispersion ($\sigma$) de la distribution spatiale des points de mesure non confirmés (9) est déterminée, la dispersion ($\sigma$) déterminée des points de mesure non confirmés (9), qui sont attribués à l'un des capteurs de distance (4), est comparée à une valeur seuil prédéterminée ($\sigma_{th}$), les points de mesure non confirmés (9) étant attribués à l'objet si la dispersion ($\sigma$) déterminée soupasse la valeur seuil prédéterminée ($\sigma_{th}$), dans lequel, pour les points de mesure (8, 9) qui sont attribués à l'un des au moins deux capteurs de distance (4), le pourcentage de points de mesure non confirmés (9) est déterminé et un indicateur de bruit est déterminé à l'aide du pourcentage, une évaluation des points de mesure non confirmés (9) étant effectuée en fonction de l'indicateur de bruit déterminé.

**2.** Procédé selon la revendication 1, **caractérisé en ce qu'**une zone de détection (12) est déterminée pour chacun des capteurs de distance (4), et les points de mesure (8, 9) sont attribués aux capteurs de distance (4) respectifs à l'aide de la zone de détection (12) déterminée respective.

**3.** Procédé selon l'une quelconque des revendications précédentes, **caractérisé en ce que** les points de mesure (8, 9) sont reportés sur une carte d'environnement qui décrit la zone environnante (7) du véhicule automobile (1), et les points de mesure (8, 9) sont attribués aux capteurs de distance (4) respectifs à l'aide de leur position sur la carte d'environnement.

**4.** Procédé selon l'une quelconque des revendications précédentes, **caractérisé en ce que** les points de mesure non confirmés (9) sont identifiés comme étant du bruit si la dispersion ($\sigma$) déterminée dépasse la valeur seuil prédéterminée ($\sigma_{th}$).

**5.** Procédé selon l'une quelconque des revendications précédentes, **caractérisé en ce que** l'indicateur de bruit est déterminé pour chacun des points de mesure non confirmés (9).

**6.** Procédé selon l'une quelconque des revendications précédentes, **caractérisé en ce que** l'indicateur de bruit qui est déterminé lors d'une séquence effectuée précédemment est mis à jour à l'aide de l'au moins un point de mesure qui est déterminé lors d'une séquence de mesure actuelle.

**7.** Dispositif de commande (3) pour un véhicule automobile (1) qui est conçu pour exécuter un procédé selon l'une quelconque des revendications précédentes.

**8.** Système d'assistance au conducteur (2) destiné à un véhicule automobile (1) comprenant un dispositif de commande (3) selon la revendication 7.

**9.** Véhicule automobile (1), comprenant un système d'assistance au conducteur (2) selon la revendication 8.

Fig.1

Fig.2

Fig.3

Fig.4

Fig.5

Fig.6

Fig.7

Fig.8

**IN DER BESCHREIBUNG AUFGEFÜHRTE DOKUMENTE**

**In der Beschreibung aufgeführte Patentdokumente**

- DE 10361315 A1
- DE 102012017367 A1
- DE 19842250 A1
- EP 1522873 A1
- US 6163252 A
- DE 102004017268 A1
- JP 2003151095 A
- EP 0369050 A1

**In der Beschreibung aufgeführte Nicht-Patentliteratur**

- Multiple-Hypothesis Trilateration and Tracking with Distributed Radars. **JELLE VAN KLEEF et al.** 9TH INTERNATIONAL CONFERENCE ON INFORMATION FUSION, FUSION - 2006 9TH INTERNATIONAL CONFERENCE ON INFORMATION FUSION. FUSION 2006 INST. OF ELEC. AND ELEC. ENG. COMPUTER SOCIETY US, IEEE, 01. Juli 2006, 1-7